# EUROPÄISCHE PATENTSCHRIFT

(11) **EP 3 361 491 B1**
(45) Veröffentlichungstag und Bekanntmachung des Hinweises auf die Patenterteilung: **03.11.2021**
(21) Anmeldenummer: 18151055.3
(22) Anmeldetag: 10.01.2018
(51) Int. Cl.: H01H 47/32, H01H 47/04

(54) **SCHALTUNGSANORDNUNG ZUM BETREIBEN MINDESTENS EINES RELAIS**
SWITCHING ASSEMBLY FOR OPERATING AT LEAST ONE RELAY
INSTALLATION DE COMMUTATION DESTINÉE AU FONCTIONNEMENT D'AU MOINS UN RELAIS

(30) Priorität: 10.02.2017 DE 102017102637
(43) Veröffentlichungstag der Anmeldung: 15.08.2018
(73) Patentinhaber: Pilz GmbH & Co. KG, 73760 Ostfildern (DE)
(72) Erfinder: Pullmann, Jürgen, 73760 Ostfildern (DE); Neuschwander, Bernd, 73760 Ostfildern (DE); Scharpf, Frieder, 73760 Ostfildern (DE)
(74) Vertreter: Manske, Jörg

(56) Entgegenhaltungen:
- EP-A1- 2 897 150
- WO-A1-2012/069869
- US-A1- 2011 080 685
- US-B1- 6 317 308

## Beschreibung

Die vorliegende Erfindung betrifft eine Schaltungsanordnung zum Betreiben mindestens eines Relais, umfassend eine Spannungsversorgungseinrichtung, die dem mindestens einen Relais eine Betriebsspannung zur Verfügung stellen kann, wobei zwischen der Betriebsspannung und Masse ein elektronischer Schalter, eine Relaisspule des mindestens einen Relais sowie ein Shunt-Widerstand elektrisch in Reihe zueinander geschaltet sind, sowie ferner umfassend einen Stromregler, der so ausgebildet ist, dass er den elektronischen Schalter insbesondere mit einer Pulsweitenmodulation ansteuern kann und einen Steuerstrom, der durch die Relaisspule fließt, regeln kann.

Bei Relais handelt es sich bekanntermaßen um elektromagnetische Schalter. Derartige Relais, die aus dem Stand der Technik in unterschiedlichen Ausführungsformen bekannt sind, eignen sich für eine Vielzahl technischer Anwendungszwecke und können zum Beispiel auch in Sicherheitsschaltgeräten eingesetzt werden. Ein Relais weist eine Relaisspule mit einem ferromagnetischen Kern auf, die an eine Schaltungsanordnung angeschlossen ist und von dieser mit einem Steuerstrom versorgt werden kann. Ferner umfasst ein Relais einen bewegbaren, ferromagnetischen Anker sowie einen oder mehrere Relaiskontakte, die mit dem Anker gekoppelt sind. Während des Betriebs fließt ein elektrischer Strom durch die Relaisspule, der seinerseits einen magnetischen Fluss durch den ferromagnetischen Kern erzeugt. Dadurch zieht der Anker an und schaltet die damit gekoppelten Relaiskontakte. Der Anker ist seinerseits mit einer Rückstellfeder gekoppelt, die dazu ausgebildet ist, den Anker durch eine Federkraft in seine Ausgangsposition zu überführen, wenn die Relaisspule nicht mehr von dem elektrischen Steuerstrom durchflossen wird. In der praktischen Anwendung wird zwischen so genannten Ruhestromrelais und Arbeitsstromrelais unterschieden. Ein Ruhestromrelais zeichnet sich dadurch aus, dass in seinem Ruhezustand der elektrische Strom durch die Relaisspule fließt und der Anker angezogen ist. Mittels eines Ruhestromrelais kann zum Beispiel ein Netzausfall oder ein Drahtbruch überwacht werden. Demgegenüber ist ein Arbeitsstromrelais in seinem Ruhezustand stromlos.

Sicherheitsschaltgeräte sind heutzutage gemäß der Norm IEC 1131 auf eine elektrische Betriebsspannung in einem Intervall von 24 V + 10 % (so genannte Überspannung) bis 24 V - 15 % (so genannte Unterspannung) ausgelegt. Im Falle einer Unterspannung liegt somit noch eine elektrische Betriebsspannung von 24 V - 15 % = 20,4 V an. In den elektrischen Schaltungen von Sicherheitsschaltgeräten werden üblicherweise Relais verwendet, die mit einer Relaisspannung von 18 V bis 20 V betrieben werden.

Ein grundsätzlicher Nachteil eines Relais besteht darin, dass es relativ empfindlich auf Stöße, Vibrationen und sonstige Erschütterungen reagiert. Bei einer Unterspannung müssen die mit mindestens einem Relais ausgestatteten Sicherheitsschaltgeräte schaltungstechnisch für alle möglichen Stöße, Erschütterungen und Vibrationen ausgelegt sein, damit ein ungewolltes Öffnen der Relaiskontakte nicht möglich ist. Zu diesem Zweck ist eine hohe elektrische Halteleistung notwendig, damit eine ausreichend große Kraft bereitgestellt werden kann, so dass der Anker die Relaiskontakte auch bei Erschütterungen in der geschlossenen Stellung halten kann.

Bei einer typischen Betriebsspannung von 24 V ist die elektrische Halteleistung erhöht, da durch die höhere Spannung auch mehr Strom durch die Relaisspule fließt. Bei einer Überspannung 24 V + 10% = 26,4 V fließt nochmals ein etwas höherer Strom durch die Relaisspule, so dass auf Grund der auftretenden Verlustleistung eine große Abwärme erzeugt wird.

Üblicherweise wird bei einer großen technischen Anlage mit langen elektrischen Versorgungsleitungen häufig eine höhere Spannung eingestellt, damit sichergestellt ist, dass auch am letzten Ende der technischen Anlage verbaute elektrische Verbraucher keine Unterspannung haben. Im Schaltschrank herrscht dabei eine leichte Überspannung, die zu erheblichen Wärmeverlusten führt, die durch höhere Ströme hervorgerufen wird, sofern diese nicht nachgeregelt werden. Zu diesem Zweck kann sinnvollerweise ein Stromregler verwendet werden. Hierbei wird der Haltestrom des Relais - unabhängig von einer Betriebsspannung - auf den notwendigen elektrischen Erregerstrom ausgeregelt. Damit kann die Ansteuerleistung des Relais entsprechend reduziert werden.

Aus der US 2006/0007627 A1 ist ein intelligentes Relaissystem mit mindestens einem Relais, einem Sensor sowie einer Steuerungseinrichtung bekannt. Dabei besteht die Möglichkeit, dass äußere Erschütterungen erfasst werden können, auf die das intelligente Relaissystem entsprechend reagieren kann.

Aus der US 6,317,308 B1 ist eine Schaltungsanordnung zum Betreiben mindestens eines Relais der eingangs genannten Art bekannt. Dabei werden Stöße oder Vibrationen durch Strommessungen und Vergleiche zwischen den Strömen abgeleitet. Als Folge davon wird der Haltestrom der Spule auf den notwendigen Erregerstrom ausgeregelt.

Die Aufgabe der vorliegenden Erfindung besteht darin, eine Schaltungsanordnung zum Betreiben mindestens eines Relais der eingangs genannten Art zur Verfügung zu stellen, die eine weitere Verringerung der elektrischen Verlustleistung des Relais und somit eine Reduzierung der Abwärme ermöglicht.

Die Lösung dieser Aufgabe liefert eine gattungsgemäße Schaltungsanordnung mit den Merkmalen des kennzeichnenden Teils des Anspruchs 1. Die Unteransprüche betreffen vorteilhafte Weiterbildungen der Erfindung.

Eine erfindungsgemäße Schaltungsanordnung zeichnet sich dadurch aus, dass die Schaltungsanordnung zumindest ein Sensormittel, welches dazu eingerichtet ist, auf das Relais einwirkende Erschütterungen, Stöße oder Vibrationen zu erfassen, sowie eine Auswerteeinheit zur Auswertung der von dem Sensormittel erfassten Sensordaten umfasst, wobei das Sensormittel als Beschleunigungssensormittel ausgebildet ist, welches dazu eingerichtet ist, eine auf das mindestens eine Relais einwirkende Beschleunigung in zumindest einer Raumrichtung zu erfassen, wobei die Auswerteeinheit so ausgebildet ist, dass sie durch eine zeitliche Differenzierung der gemessenen Beschleunigungswerte einen im Bereich des Relais herrschenden Ruck j bestimmen kann, wobei der Stromregler dazu ausgebildet ist, den Steuerstrom auf Basis des von der Auswerteeinheit bestimmten Rucks zu regeln. Das Relais kann vorzugsweise ein Sicherheitsrelais mit zwangsgeführten Relaiskontakten sein, wie es in Sicherheitsschaltgeräten eingesetzt werden kann. Die Erfindung geht von der Idee aus, durch die Verwendung eines geeigneten Sensormittels Informationen über mögliche Erschütterungen, Stöße, Vibrationen oder sonstige Störgrößen, die von außen auf das Relais einwirken, zu erhalten und den Steuerstrom, der durch die Relaisspule fließt, bedarfsgerecht zu regeln. Es hat sich gezeigt, dass der Ruck eine geeignete kinematische Größe ist, um die Einwirkung von Stößen, Erschütterungen oder Vibrationen auf das mindestens eine Relais zu erfassen. Wenn das Relais keinen Erschütterungen, Stößen, Vibrationen oder sonstigen vergleichbaren äußeren Störeinflüssen ausgesetzt ist, ist die Gefahr eines erschütterungsinduzierten Abfallens eines Relaiskontakts relativ gering, so dass das Relais mit einem geringen Steuerstrom betrieben werden kann und die Verlustleistung somit verringert werden kann. Wenn das Relais entsprechenden Erschütterungen, Stößen, Vibrationen etc. ausgesetzt ist, ist das Risiko eines erschütterungsinduzierten Abfallens eines Relaiskontakts größer, so dass es vorteilhaft ist, die Relaisspule mit einem höheren Steuerstrom zu betreiben. Eine dynamische, bedarfsgerechte Regelung des Steuerstroms der Relaisspule liefert insgesamt erhebliche Vorteile, um die Verlustleistung des Relais zu verringern. Versuche haben gezeigt, dass eine Absenkung des Steuerstroms auf bis zu 50 % der Herstellerspezifikation möglich ist, wenn Erschütterungen, Vibrationen oder dergleichen Störeinflüsse, die auf das Relais einwirken, permanent erfasst werden und der Steuerstrom entsprechend nachgeregelt wird. Der Stromregler bildet vorzugsweise einen PI-Regler, bei dem das Aufaddieren der Regelabweichungen dazu führt, dass die Regelabweichung schließlich zu null wird. Ein PI-Regler besitzt somit in vorteilhafter Weise keine bleibende Regelabweichung.

Vorzugsweise können das Sensormittel und die Auswerteeinheit in das Relais integriert sein. Daraus ergeben sich insbesondere Bauraumvorteile. Ferner müssen das Sensormittel und die Auswerteeinheit nicht extern verbaut sein.

Das Sensormittel ist als Beschleunigungssensormittel ausgebildet, welches dazu eingerichtet ist, eine auf das mindestens eine Relais einwirkende Beschleunigung in zumindest einer Raumrichtung zu erfassen. Ein derartiges einachsiges Beschleunigungssensormittel ist in vielen Fällen ausreichend. Diese (eine) Raumrichtung kann insbesondere mit der Achse des Relaisankers korrelieren, da die in dieser Richtung wirkende Beschleunigung besonders kritisch ist. Vorzugsweise kann das Beschleunigungssensormittel ein mikroelektromechanisches System (MEMS) sein. Für bestimmte Anwendungsfälle müssen zum Beispiel zwei Relais rechtwinklig zueinander angeordnet werden. Um diesem Umstand Rechnung zu tragen, kann in einer besonders bevorzugten Ausführungsform das Beschleunigungssensormittel dazu eingerichtet sein, die auf das mindestens eine Relais einwirkende Beschleunigung in zumindest zwei Raumrichtungen, vorzugsweise in drei Raumrichtungen, zu erfassen. Das Beschleunigungssensormittel kann insbesondere auf einer Leiterplatte der Schaltungsanordnung (vorzugsweise in räumlicher Nähe zum Relais) angeordnet sein.

In einer weiteren Ausführungsform besteht zum Beispiel auch die Möglichkeit, dass das Beschleunigungssensormittel neunachsig ausgeführt ist und ein Gyroskop sowie ein Magnetometer umfasst. Diese Ausführungsform ermöglicht eine besonders exakte Bestimmung der auf das mindestens eine Relais wirkenden Beschleunigung.

In einer besonders bevorzugten Ausführungsform wird vorgeschlagen, dass das Beschleunigungssensormittel eine Abtastrate aufweist, die mindestens 1 kHz, vorzugsweise mindestens 3 kHz, insbesondere mindestens 5 kHz beträgt. Eine hohe Abtast- und Datenrate ermöglicht eine schnelle Bewertung des aktuellen Betriebszustands des mindestens einen Relais im Hinblick auf mögliche Erschütterungen, Stöße, Vibrationen oder sonstige Störeinflüsse. In diesem Zusammenhang hat es sich als besonders vorteilhaft erwiesen, dass die Abtastrate des Beschleunigungssensormittels mindestens 5 kHz beträgt. Neben dem Stromregler, ist in der Schaltungsanordnung eine Hardware und Software implementiert, die in der Lage ist, mit einer Abtastrate von 5 kHz und damit alle 200 µs eine Bewertung durchzuführen, ob ein Regeleingriff erforderlich ist, der eine Änderung des Steuerstroms durch die Relaisspule notwendig macht.

Vorzugsweise kann der elektronische Schalter ein bipolarer Transistor sein. Diese Ausführungsform ermöglicht eine besonders robuste Ausgestaltung des elektronischen Schalters.

Vorzugsweise kann der Stromregler so ausgebildet sein, dass er den durch die Relaisspule fließenden Steuerstrom erhöht, wenn j ≥ jₖᵣᵢₜ ist, wobei jₖᵣᵢₜ ein kritischer Schwellwert des Rucks ist. Vorzugsweis kann der kritische Schwellwert des Rucks, der für verschiedene Relaistypen unterschiedlich sein kann, in einem Festwertspeicher abrufbar gespeichert sein.

In einer bevorzugten Ausführungsform besteht die Möglichkeit, dass der Stromregler so ausgebildet ist, dass er den durch die Relaisspule fließenden Steuerstrom dekrementell verringert, wenn j < jₖᵣᵢₜ ist. Diese dekrementelle Verringerung kann so lange erfolgen, bis ein minimaler Steuerstrom l_{Min}, der ebenfalls abhängig vom Relaistyp ist, erreicht ist. Dieser minimale Steuerstrom l_{Min} kann im Bereich von etwa 50 % des vom Relaishersteller spezifizierten Haltestroms liegen.

In einer besonders bevorzugten Ausführungsform kann vorgesehen sein, dass die Relaisspule eine Spulenspannung aufweist, die kleiner als die Hälfte der von der Spannungsversorgungseinrichtung zur Verfügung gestellten Betriebsspannung ist. Beispielsweise kann ein Relais mit einer Relaisspannung von 9 V verwendet werden. Bei einer Betriebsspannung von 24 V beträgt das Tastverhältnis (der so genannte "Duty Cycle") der Pulsweitenmodulation etwa 30 %. Durch den großen Potentialunterschied von 9 V zu 24 V führt eine Regeldifferenz zu hohen Spulenströmen und der neue Sollwert des Steuerstroms kann somit rasch erreicht werden. Dadurch kann die Halteleistung des Relais in vorteilhafter Weise weiter abgesenkt werden. Eine Relaisspule mit einer Relaisspannung von 9 V hat darüber hinaus noch weitere signifikante Vorteile: Eine Spannungsunterbrechung oder ein Einbruch der Betriebsspannung unter 16 V führte bislang zu einem Fehler eines mit dem Relais ausgestatteten Sicherheitsschaltgerätes. Nun kann das Sicherheitsschaltgerät bis zu einer Spannung von 10,5 V ordnungsgemäß betrieben werden. Eine Relaisspule mit einer Spulenspannung von 9 V weist überdies einen dickeren Spulendraht auf, der bei einem Wickelvorgang sehr viel seltener reißt, so dass sich Vorteile bei der Herstellung ergeben. Die Wickelzeit ist deutlich kürzer, so dass auch die Herstellkosten des Relais sinken. Der dickere Spulendraht ist überdies deutlich preiswerter als ein sehr dünn ausgeführter Spulendraht.

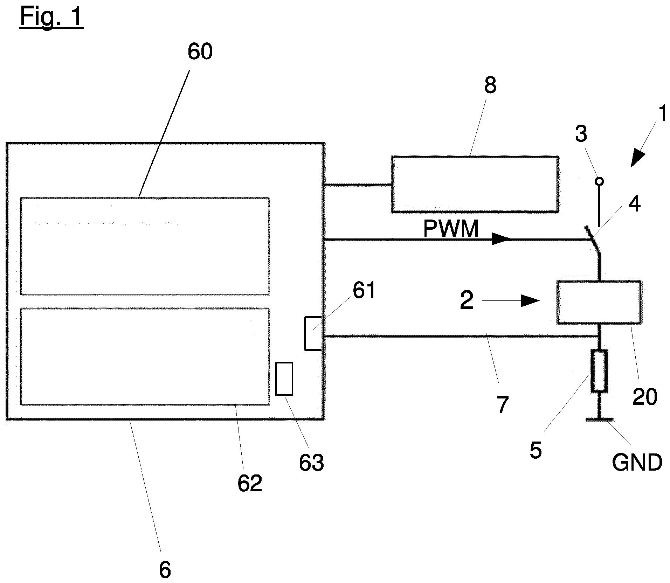

Weitere Merkmale und Vorteile der vorliegenden Erfindung werden deutlich anhand der nachfolgenden Beschreibung eines bevorzugten Ausführungsbeispiels unter Bezugnahme auf die beiliegende Fig. 1, die eine schematisch stark vereinfachte Darstellung einer Schaltungsanordnung 1 zum Ansteuern eines Relais 2, die gemäß einem bevorzugten Ausführungsbeispiel der vorliegenden Erfindung ausgeführt ist, zeigt.

Das Relais 2, das insbesondere ein Sicherheitsrelais eines Sicherheitsschaltgeräts sein kann, weist in an sich bekannter Weise eine Relaisspule 20 mit einem ferromagnetischen Kern, einen bewegbaren, ferromagnetischen Anker sowie einen oder mehrere Relaiskontakte, die mit dem Anker gekoppelt sind, auf. Die Schaltungsanordnung 1 umfasst ferner eine hier nicht explizit dargestellte Spannungsversorgungseinrichtung, die eine Betriebsspannung 3 zur Verfügung stellen kann. In diesem Ausführungsbeispiel liefert die Spannungsversorgungseinrichtung eine Betriebsspannung 3 in Höhe von 24 V (DC). Zwischen der Betriebsspannung 3 und Masse GND sind ein elektronischer Schalter 4, die Relaisspule 20 des Relais 2 sowie ein Shunt-Widerstand 5 elektrisch in Reihe miteinander geschaltet. Die Relaisspule 20 ist dabei zwischen dem elektronischen Schalter 4 und dem Shunt-Widerstand 5 angeordnet.

Der elektronische Schalter 4 ist vorzugsweise in Halbleitertechnik ausgeführt. Vorliegend ist der elektronische Schalter 4 ein bipolarer pnp-Transistor. Der elektronische Schalter 4 kann in einer alternativen Ausführungsform zum Beispiel auch als Feldeffekttransistor (FET) ausgeführt sein. Die Schaltungsanordnung 1 weist ferner eine Steuerungs- und Auswerteeinrichtung 6 auf, die an den elektronischen Schalter 4 angeschlossen ist. Die Steuerungs- und Auswerteeinrichtung 6 ist vorliegend als Microcontroller ausgeführt.

Alternativ kann die Steuerungs- und Auswerteeinrichtung 6 zum Beispiel auch durch einen Mikroprozessor nebst zugehöriger Peripherie gebildet sein.

In der Steuerungs- und Auswerteeinrichtung 6 ist ein Stromregler 60 implementiert. Dieser Stromregler 60 ist so ausgebildet, dass er den elektronischen Schalter 4 mit einer Pulsweitenmodulation (PWM) ansteuern kann, so dass ein Steuerstrom, der durch die Relaisspule 20 fließt, auf einen definierten Stromwert geregelt werden kann. Zwischen der Relaisspule 20 und dem Shunt-Widerstand 5 ist ein Abgriff 7 vorgesehen, der an einen A/D-Wandler 61 der Steuerungs- und Auswerteeinrichtung 6 angeschlossen ist. Die Steuerungs- und Auswerteeinrichtung 6 - insbesondere der darin implementierte Stromregler 60 - ist so ausgeführt, dass sie über den Abgriff 7 die Spannung über dem Shunt-Widerstand 5 messen kann und daraus den durch die Relaisspule 20 fließenden Steuerstrom bestimmen kann.

Mittels des vorstehend beschriebenen Stromreglers 60 ist es zum Beispiel grundsätzlich möglich, den Steuerstrom durch die Relaisspule 20 unabhängig von der Betriebsspannung 3 auf den Nennwert des Haltestroms für die Relaiskontakte des Relais 2 zu regeln. Dadurch kann die elektrische Halteleistung des Relais 2 bereits in vorteilhafter Weise verringert werden. In diesem Zusammenhang ist es jedoch wünschenswert, die elektrische Halteleistung des Relais 2 noch weiter verringern zu können. Hierbei stellt sich allerdings das Problem, dass die Relaiskontakte des Relais 2 unter dem Einfluss von Vibrationen, Stößen, Erschütterungen oder sonstigen äußeren Störeinflüssen abfallen könnten, wenn der elektrische Steuerstrom und damit auch die elektrische Halteleistung auf einen zu geringen Wert eingeregelt werden. Um diesem Problem abzuhelfen, weist die hier beschriebene Schaltungsanordnung 1 darüber hinaus zumindest ein Beschleunigungssensormittel 8 auf, das an die Steuerungs- und Auswerteeinrichtung 6 angeschlossen ist. In der Steuerungs- und Auswerteeinrichtung 6 ist eine Auswerteeinheit 62 zur Auswertung der von dem Beschleunigungssensormittel 8 zur Verfügung gestellten Beschleunigungsinformationen implementiert. Ein Ziel ist es dabei, die momentan auf das Relais 2 einwirkenden Erschütterungen, die einen Abfall der Relaiskontakte zur Folge haben könnten, schnell genug zu erfassen. Vorzugsweise ist das Beschleunigungssensormittel 8 so ausgebildet, dass es mit einer Abtastrate von 5 kHz die auf die Schaltungsanordnung 1 und damit auch auf das Relais 2 einwirkende Beschleunigung messen kann. Somit erhält die Auswerteeinheit 62 in Zeitintervallen von jeweils 200 µs Beschleunigungsmesswerte von dem Beschleunigungssensormittel 8.

Das Beschleunigungssensormittel 8 ist so ausgeführt, dass es die Beschleunigung in mindestens einer Raumrichtung messen kann.

Diese Raumrichtung kann insbesondere mit der Achse des Relaisankers korrelieren, da die in dieser Richtung wirkende Beschleunigung besonders kritisch ist. Als besonders vorteilhaft hat sich ein dreiachsiges Beschleunigungssensormittel 8 erwiesen, das die Beschleunigung in drei zueinander orthogonalen Raumrichtungen ermitteln kann. Vorzugsweise kann das Beschleunigungssensormittel 8 ein mikroelektromechanisches System (MEMS) sein. Gemäß einer vorteilhaften Weiterentwicklung kann das Beschleunigungssensormittel 8 auch neunachsig ausgeführt sein und ein Gyroskop sowie ein Magnetometer umfassen. Dadurch werden besonders exakte Beschleunigungsmesswerte erhalten.

Die Auswerteeinheit 62 ist so konfiguriert, dass sie durch eine zeitliche Differenzierung der gemessenen Beschleunigungswerte den momentan im Bereich des Relais 2 herrschenden Ruck j bestimmen kann. In der Auswerteeinheit 62 ist zu diesem Zweck ein entsprechender Auswertealgorithmus implementiert, der durch Bildung der ersten zeitlichen Ableitung der Beschleunigung den Ruck j bestimmen kann. Die Steuerungs- und Auswerteeinrichtung 6 weist einen auslesbaren Festwertspeicher 63 auf, in dem ein kritischer, relaisspezifischer Ruckschwellwert jₖᵣᵢₜ abrufbar gespeichert ist.

Wenn j ≥ jₖᵣᵢₜ ist, wird der Steuerstrom, der durch die Relaisspule 20 fließt, vom Stromregler 60 erhöht, so dass die elektrische Halteleistung vergrößert wird. Dadurch kann ein Abfallen der Relaiskontakte durch die Einwirkung von Stößen, Erschütterungen oder Vibrationen wirksam verhindert werden. Wenn demgegenüber j < jₖᵣᵢₜ ist, wird der Steuerstrom, der durch die Relaisspule 20 fließt, vom Stromregler 60 dekrementell erniedrigt, so dass die Halteleistung verringert wird. Die Erniedrigung des Steuerstroms erfolgt höchstens so lange, bis ein relaisspezifischer minimal zulässiger Haltestrom l_{Min} erreicht wird, der nicht unterschritten werden darf. Sollte der Ruck j den kritischen Ruckschwellwert jₖᵣᵢₜ erreichen beziehungsweise überschreiten, wird der Stromfluss durch die Relaisspule 20 wieder erhöht. In diesem Zusammenhang ist zu beachten, dass sich die Relaisspule 20 aufgrund von Selbstinduktionseffekten den Stromänderungen widersetzt. Die Zeitkonstante τ=R/L der Relaisspule 20, wobei R der elektrische Widerstand und L die Induktivität ist, ist nicht linear und hängt auch von der Größe des Stromflusses durch die Relaisspule 20 ab. Der Stromregler 60 bildet vorliegend einen PI-Regler, bei dem das Aufaddieren der Regelabweichungen dazu führt, dass die Regelabweichung schließlich zu null wird. Ein PI-Regler besitzt somit in vorteilhafter Weise keine bleibende Regelabweichung.

Es hat sich als vorteilhaft erwiesen, ein Relais 2 mit einer Relaisspule 20 zu verwenden, die mit einer Relaisspannung betrieben wird, die deutlich kleiner als die Hälfte der Betriebsspannung 3 (vorliegend 24 V) ist. Beispielsweise kann ein Relais 2 mit einer Relaisspannung von 9 V verwendet werden. Bei einer Betriebsspannung von 24 V beträgt das Tastverhältnis (der so genannte "Duty Cycle") der Pulsweitenmodulation etwa 30 %. Bei der Detektion eines Rucks j ≥ jₖᵣᵢₜ wird die Pulsweitenmodulation auf 100 % eingestellt, so dass bei einer elektrischen Betriebsspannung von 24 V und einer Relaisspannung von 9 V eine hohe Stromänderung verursacht werden kann. Im Falle eines Rucks j ≥ jₖᵣᵢₜ wird somit rechtzeitig der elektrische Stromfluss durch die Relaisspule 20 erhöht, indem die Pulsweitenmodulation auf 100 % gesetzt oder komplett eingeschaltet wird. Ein derartiger Ruck führt somit zu einer Regelungsabweichung, welche der Stromregler 60 sofort ausregelt. Wird ein Strom-Sollwert erreicht, der bei Stößen, Erschütterungen oder Vibrationen nicht zu einem Abfall der Relaiskontakte des Relais 2 führt, wird der Strom wieder nachgeregelt und die Pulsweitenmodulation nimmt kleinere Werte an.

Mittels der hier vorgestellten Schaltungsanordnung 1 ist es möglich, den Steuerstrom, der durch die Relaisspule 20 fließt, gegenüber den Herstellerspezifikationen drastisch zu verringern, ohne dabei die Betriebssicherheit zu gefährden. Dadurch kann die Verlustleistung und damit verbunden auch die Abwärme des Relais 2 erheblich verringert werden, ohne dass dieses mit Einbußen hinsichtlich der Zuverlässigkeit bei Erschütterungen, Stößen oder Vibrationen verbunden ist. Untersuchungen haben ergeben, dass eine Absenkung des Steuerstroms auf Werte möglich ist, die etwa 50 % des vom Relaishersteller spezifizierten Haltestroms betragen, so dass die Eigenerwärmung des Relais 2 erheblich verringert werden kann.

## Patentansprüche

1. Schaltungsanordnung (1) zum Betreiben mindestens eines Relais (2), umfassend
- eine Spannungsversorgungseinrichtung, die dem mindestens einen Relais (2) eine Betriebsspannung (3) zur Verfügung stellen kann, wobei zwischen der Betriebsspannung (3) und Masse (GND) ein elektronischer Schalter (4), eine Relaisspule (20) des mindestens einen Relais (2) sowie ein Shunt-Widerstand (5) elektrisch in Reihe zueinander geschaltet sind, sowie
- einen Stromregler (60), der so ausgebildet ist, dass er den elektronischen Schalter (4) insbesondere mit einer Pulsweitenmodulation ansteuern kann und einen Steuerstrom, der durch die Relaisspule (20) fließt, regeln kann,
**dadurch gekennzeichnet, dass** die Schaltungsanordnung (1) zumindest ein Sensormittel, welches dazu eingerichtet ist, auf das Relais (2) einwirkende Erschütterungen, Stöße oder Vibrationen zu erfassen, sowie eine Auswerteeinheit (62) zur Auswertung der von dem Sensormittel erfassten Sensordaten umfasst, wobei das Sensormittel als Beschleunigungssensormittel (8) ausgebildet ist, welches dazu eingerichtet ist, eine auf das mindestens eine Relais (2) einwirkende Beschleunigung in zumindest einer Raumrichtung zu erfassen, wobei die Auswerteeinheit (62) so ausgebildet ist, dass sie durch eine zeitliche Differenzierung der gemessenen Beschleunigungswerte einen im Bereich des Relais (2) herrschenden Ruck (j) bestimmen kann, wobei der Stromregler (60) dazu ausgebildet ist, den Steuerstrom auf Basis des von der Auswerteeinheit (62) bestimmten Rucks (j) zu regeln.

2. Schaltungsanordnung (1) nach Anspruch 1, **dadurch gekennzeichnet, dass** das Beschleunigungssensormittel (8) dazu eingerichtet ist, die auf das mindestens eine Relais (2) einwirkende Beschleunigung in zumindest zwei Raumrichtungen, vorzugsweise in drei Raumrichtungen, zu erfassen.

3. Schaltungsanordnung (1) nach einem der Ansprüche 1 oder 2, **dadurch gekennzeichnet, dass** das Beschleunigungssensormittel (8) neunachsig ausgeführt ist und ein Gyroskop sowie ein Magnetometer umfasst.

4. Schaltungsanordnung (1) nach einem der Ansprüche 1 bis 3, **dadurch gekennzeichnet, dass** das Beschleunigungssensormittel (8) eine Abtastrate aufweist, die mindestens 1 kHz, vorzugsweise mindestens 3 kHz, insbesondere mindestens 5 kHz beträgt.

5. Schaltungsanordnung (1) nach einem der Ansprüche 1 bis 4, **dadurch gekennzeichnet, dass** der elektronische Schalter (4) ein bipolarer Transistor ist.

6. Schaltungsanordnung (1) nach einem der Ansprüche 1 bis 5, **dadurch gekennzeichnet, dass** der Stromregler (60) so ausgebildet ist, dass er den durch die Relaisspule (20) fließenden Steuerstrom erhöht, wenn j ≥ jₖᵣᵢₜ ist, wobei jₖᵣᵢₜ ein kritischer Schwellwert des Rucks ist.

7. Schaltungsanordnung (1) nach Anspruch 6, **dadurch gekennzeichnet, dass** der Stromregler (60) so ausgebildet ist, dass er den durch die Relaisspule (20) fließenden Steuerstrom dekrementell verringert, wenn j < jₖᵣᵢₜ ist.

8. Schaltungsanordnung (1) nach einem der Ansprüche 1 bis 7, **dadurch gekennzeichnet, dass** die Relaisspule (20) eine Spulenspannung aufweist, die kleiner als die Hälfte der von der Spannungsversorgungseinrichtung zur Verfügung gestellten Betriebsspannung (3) ist.

## Claims

1. Circuit arrangement (1) for operating at least one relay (2), comprising:
- a voltage supply device which can supply an operating voltage (3) to the at least one relay (2), wherein an electronic switch (4), a relay coil (20) of the at least one relay (2) and a shunt resistor (5) are electrically connected in series with one another between the operating voltage (3) and ground (GND), and
- a current regulator (60) which is configured so that it can actuate the electronic switch (4) in particular with pulse width modulation and can control a control current that flows through the relay coil (20),
**characterised in that** the circuit arrangement (1) comprises at least one sensor means which is configured to detect shocks, impacts or vibrations acting on the relay (2), as well as an evaluation unit (62) for evaluating the sensor data detected by the sensor means, wherein the sensor means is configured as an acceleration sensor means (8), which is configured to detect an acceleration acting on the at least one relay (2) in at least one direction in space, wherein the evaluation unit (62) is configured so that it can determine a jerk (j) occurring in the region of the relay (2) from a time derivative of the measured acceleration values, wherein the current regulator (60) is configured to adjust the control current based on the jerk (j) determined by the evaluation unit (62).

2. Circuit arrangement (1) according to claim 1, **characterised in that** the acceleration sensor means (8) is configured to detect the acceleration acting on the at least one relay (2) in at least two directions in space, preferably in three directions in space.

3. Circuit arrangement (1) according to any of claims 1 or 2, **characterised in that** the acceleration sensor means (8) includes nine axes and comprises a gyroscope and a magnetometer.

4. Circuit arrangement (1) according to any of claims 1 to 3, **characterised in that** the acceleration sensor means (8) has a scan rate of at least 1 kHz, preferably at least 3 kHz, in particular at least 5 kHz.

5. Circuit arrangement (1) according to any of claims 1 to 4, **characterised in that** the electronic switch (4) is a bipolar transistor.

6. Circuit arrangement (1) according to any of claims 1 to 5, **characterised in that** the current regulator (60) is configured to increase the control current flowing through the relay coil (20), if j ≥ jₖᵣᵢₜ, wherein jₖᵣᵢₜ is a critical threshold value of the jerk.

7. Circuit arrangement (1) according to claim 6, **characterised in that** the current regulator (60) is configured to decrementally decrease the control current flowing through the relay coil (20), if j < jₖᵣᵢₜ.

8. Circuit arrangement (1) according to any of claims 1 to 7, **characterised in that** the relay coil (20) has a coil voltage that is less than half of the operating voltage (3) provided by the voltage supply device.

## Revendications

1. Agencement de circuit (1) permettant de faire fonctionner au moins un relais (2), comprenant
- un appareil d'alimentation en tension, pouvant fournir une tension de fonctionnement (3) au au moins un relais (2), dans lequel un commutateur électronique (4), une bobine de relais (20) du au moins un relais (2) et une résistance de dérivation (5) sont connectés électriquement en série entre la tension de fonctionnement (3) et la masse (GND), et
- un régulateur de courant (60) réalisé de sorte qu'il peut commander le commutateur électronique (4), en particulier avec une modulation de largeur d'impulsion, et peut réguler un courant de commande circulant à travers la bobine de relais (20),
**caractérisé en ce que** l'agencement de circuit (1) comprend au moins un moyen de détection conçu pour détecter des secousses, des chocs ou des vibrations s'exerçant sur le relais (2), et une unité d'évaluation (62) permettant d'évaluer les données de détection détectées par le moyen de détection, dans lequel le moyen de détection est réalisé sous la forme d'un moyen de détection d'accélération (8) conçu pour détecter une accélération s'exerçant sur le au moins un relais (2) dans au moins une direction spatiale, dans lequel l'unité d'évaluation (62) est réalisée de sorte qu'elle peut déterminer une secousse (j) s'appliquant à la région du relais (2) grâce à une différenciation temporelle des valeurs d'accélération mesurées, dans lequel le régulateur de courant (60) est réalisé afin de réguler le courant de commande en se basant sur la secousse (j) déterminée par l'unité d'évaluation (62).

2. Agencement de circuit (1) selon la revendication 1, **caractérisé en ce que** le moyen de détection d'accélération (8) est conçu pour détecter l'accélération s'exerçant sur le au moins un relais (2) dans au moins deux directions spatiales, de préférence dans trois directions spatiales.

3. Agencement de circuit (1) selon la revendication 1 ou 2, **caractérisé en ce que** le moyen de détection d'accélération (8) est mis en œuvre sur neuf axes et comprend un gyroscope et un magnétomètre.

4. Agencement de circuit (1) selon l'une quelconque des revendications 1 à 3, **caractérisé en ce que** le moyen de détection d'accélération (8) présente une fréquence d'échantillonnage d'au moins 1 kHz, de préférence d'au moins 3 kHz, en particulier d'au moins 5 kHz.

5. Agencement de circuit (1) selon l'une quelconque des revendications 1 à 4, **caractérisé en ce que** le commutateur électronique (4) est un transistor bipolaire.

6. Agencement de circuit (1) selon l'une quelconque des revendications 1 à 5, **caractérisé en ce que** le régulateur de courant (60) est réalisé de sorte qu'il augmente le courant de commande circulant à travers la bobine de relais (20) lorsque j ≥ jₖᵣᵢₜ, dans lequel jₖᵣᵢₜ est une valeur de seuil critique de la secousse.

7. Agencement de circuit (1) selon la revendication 6, **caractérisé en ce que** le régulateur de courant (60) est réalisé de sorte qu'il diminue de manière décrémentielle le courant de commande circulant à travers la bobine de relais (20) lorsque j < jₖᵣᵢₜ.

8. Agencement de circuit (1) selon l'une quelconque des revendications 1 à 7, **caractérisé en ce que** la bobine de relais (20) présente une tension de bobine inférieure à la moitié de la tension de fonctionnement (3) fournie par l'appareil d'alimentation en tension.
